# EUROPEAN PATENT APPLICATION

(11) **EP 4 546 320 A1**
(43) Date of publication of application: **30.04.2025**
(21) Application number: 24207340.1
(22) Date of filing: 17.10.2024
(51) Int. Cl.: G09G 3/20

(54) **DISPLAY SYSTEM, IMAGE PROCESSING DEVICE, AND CORRECTION DATA GENERATING METHOD**

(30) Priority: 25.10.2023 JP 2023183300
(71) Applicant: Alps Alpine Co., Ltd., Ota-ku, Tokyo 145-8501 (JP)
(72) Inventor: Kitamura, Kazuhiro, Iwaki-city, Fukushima (JP); Otani, Hisashi, Iwaki-city, Fukushima (JP)
(74) Representative: Schmitt-Nilson Schraud Waibel Wohlfrom Patentanwälte Partnerschaft mbB

(57) **Abstract**

A display system, wherein a front surface of a display part is covered with a covering surface which is patterned, and has a number of micropores, includes a correction data storage part configured to store correction data generated by gradation inversion of luminance distribution data appearing on the covering surface when a single color is uniformly displayed on a whole of the display part, and an image processing part configured to correct image data to be displayed on the display part by the correction data read from the correction data storage part.

## Description

The disclosures herein relate to display systems, image processing devices, and correction data generating methods, and are particularly suitable for use in the display system in which a front surface of a display part is covered with a patterned covering surface having a plurality of micropores, an image processing device applied thereto, and a correction data generating method.

Conventionally, there has been known a technology to provide necessary visual information by a display when in use, and provide an appearance that conceals the display during nonuse (e.g., see JP 2001-331132 A). An on-vehicle display device disclosed in JP 2001-331132 A is fitted into a wood-grain panel of an instrument panel of a vehicle, and the front surface of the display, which emits display light to an outside when lit, is covered with a wood-grain screen having a large number of micropores through which display light can be transmitted. Thus, while the screen is visible through the micropores of the screen when the display is lit, the wood-grain screen hides the display when the display is not lit, so that the entire instrument panel, including the part in which the display is fitted, is unified into a wood-grain pattern.

In recent years, such a technology in which an image is displayed on a display only when necessary is referred to as Shytech, and it has attracted attention as a technology to display a screen on an interior portion with a pattern such as wood grain or fabric. However, since the interior portion in which Shytech is implemented is not a display space optimized for screen display, there has been a problem that the image displayed on the screen and a pattern on the interior portion overlap and the displayed image becomes difficult to see.

An object of the present invention is to reduce the problem that a display image of a display part seen through micropores and a pattern on a covering surface overlap to make the display image difficult to see, in a display system in which the front surface of the display part is covered with a patterned covering surface having many micropores.

The present disclosure relates to a display system, an image processing device and correction data generating method according to the appended claims. Embodiments are disclosed in the dependent claims. According to an aspect of the present disclosure, a display system, wherein a front surface of a display part is covered with a covering surface which is patterned, and has a number, particularly a large number, of micropores, includes a correction data storage part configured to store correction data generated by gradation inversion of luminance distribution data appearing on the covering surface when a single color is uniformly displayed on a whole of the display part, and an image processing part configured to correct image data to be displayed on the display part by the correction data read from the correction data storage part.

According to the present disclosure configured as described above, the image data to be displayed on the display part is corrected by the correction equivalent to canceling the pattern of the covering surface. As a result, it is possible to reduce the problem that the display image of the display part seen through the micropores overlaps with the pattern of the covering surface, making the display image difficult to see, and to improve quality of the display image.
FIG. 1 is a drawing schematically illustrating a configuration example of a display system according to an embodiment;
FIG. 2 is a front view illustrating an instrument panel viewed from the front;
FIG. 3 is a block diagram illustrating an example of a functional configuration of an image processing device according to an embodiment;
FIG. 4 is a drawing describing a correction data generating method according to an embodiment; and
FIG. 5 is a drawing illustrating an example of correction processing by the image processing part according to an embodiment.

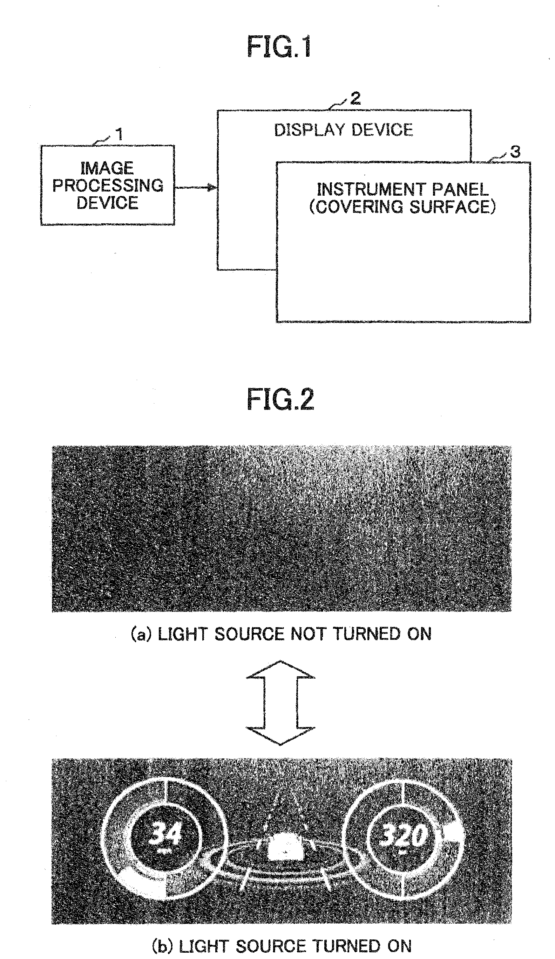

In the following, embodiments of the present invention will be described with reference to the accompanying drawings. FIG. 1 is a drawing schematically illustrating a configuration example of a display system according to an embodiment. In the present embodiment, as an example, a configuration when the display system is applied to an inside of a vehicle is shown. As shown in FIG. 1, the display system according to the present embodiment includes an image processing device 1, a display device 2, and an instrument panel 3.

The image processing device 1 is a device to generate image data to be displayed on the display part of the display device 2, and supplies generated image data to the display device 2. For example, the image processing device 1 inputs image data generated by an on-vehicle device (not shown), corrects the input image data based on correction data, and supplies corrected image data to the display device 2. Alternatively, the image processing device 1 may store an application program for image generation, corrects the image data generated by execution of the application program based on the correction data, and supplies the corrected image data to the display device 2.

The display device 2 is, for example, a liquid crystal display, an organic electroluminescence display, or an LED display, and includes a light source, a driver, and a display part. The display device 2 receives image data from the image processing device 1, controls the light source and the driver based on the image data, and displays an image based on the image data on the display part. The display part includes a display panel.

The instrument panel 3 corresponds to the covering surface of the claims, and the display device 2 is installed on the back of the instrument panel 3 (inside a dashboard or console where the instrument panel 3 is installed), and the front surface of the display part of the display device 2 is covered with the instrument panel 3. The display part of the display device 2 and the instrument panel 3 are not required to have the same size, and the entire display part may be covered by the instrument panel 3.

The instrument panel 3 is provided with an arbitrary pattern such as a grain pattern or a fabric pattern. In addition, the instrument panel 3 has a number of micropores, particularly a large number of micropores, through which display light output through the display part can be transmitted. When the light source part of the display device 2 is turned on, the display light of the display part is transmitted forward through the micropores of the instrument panel 3, so that the display image of the display part can be seen through the instrument panel 3. Conversely, when the light source part is not turned on, the image is not seen on the instrument panel 3, and the entire instrument panel 3 is unified with a pattern such as a grain pattern.

FIG. 2 is a front view illustrating an instrument panel 3 viewed from the front, and FIG. 2 (a) shows a state when the light source is not turned on, and FIG. 2 (b) shows a state when the light source is turned on. FIG. 2 (b) shows a state in which an image based on uncorrected image data is displayed.

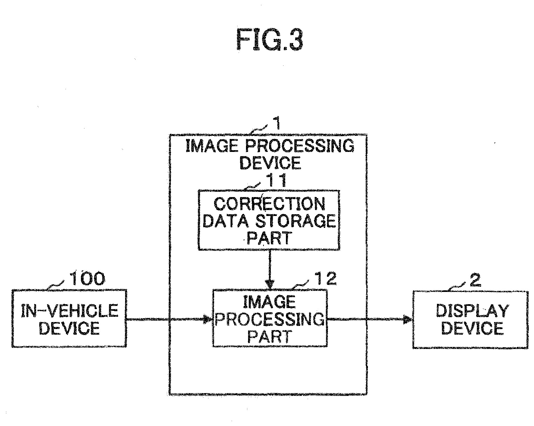

FIG. 3 is a block diagram illustrating an example of a functional configuration of the image processing device 1. As shown in FIG. 3, the image processing device 1 of the present embodiment includes a correction data storage part 11 and an image processing part 12. The image processing part 12 executes the following processing in cooperation with hardware and software. For example, the processing of the image processing part 12 is executed by operating a program stored in a storage medium such as a RAM, a ROM, a hard disk, or a semiconductor memory under the control of a microcomputer including a CPU, a RAM, a ROM, and the like. In addition to the microcomputer, a DSP (Digital Signal Processor), a GPU (Graphics Processing Unit), and the like may be provided.

The correction data storage part 11 stores correction data generated in advance, for example, when the display system is manufactured or mounted on a vehicle. The correction data is generated by inverting the gradation of the data of the luminance distribution appearing on the instrument panel 3 when the entire display part is uniformly displayed with the same color under the condition that the ambient illuminance of the instrument panel 3 is controlled to be in a predetermined state.

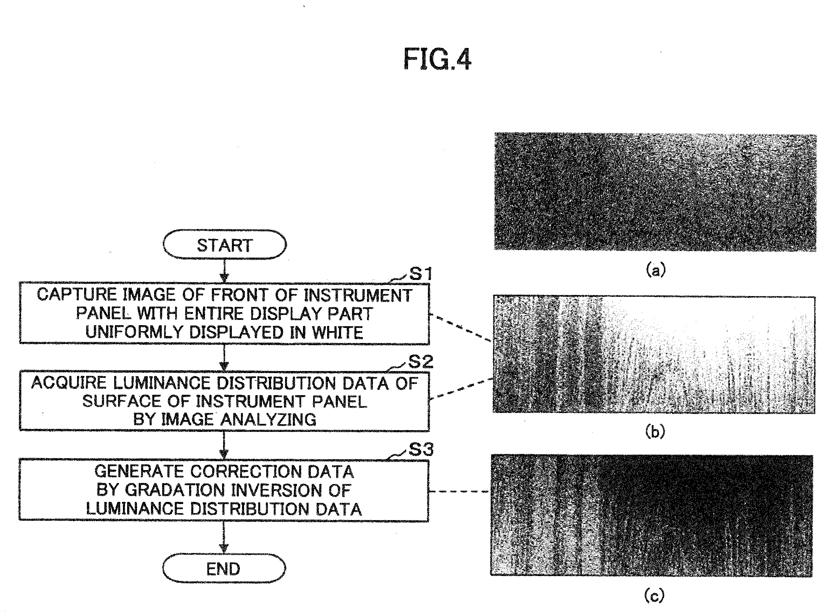

FIG. 4 is a drawing describing a correction data generating method. The correction data is generated, for example, by an image analysis device (not shown). FIG. 4 (a) is a front view showing a state of the instrument panel 3 as viewed from the front, and shows a state when the light source portion of the display device 2 is not lit. As described above, when the light source portion is not lit, no image is visible on the instrument panel 3, and the entire instrument panel 3 is unified with a pattern such as wood grain.

First, under a state in which the ambient illuminance of the instrument panel 3 shown in FIG. 4 (a) is controlled to be a predetermined state, an image of the instrument panel 3 is captured from the front of the instrument panel 3 with the entire display part of the display device 2 uniformly displayed in white (step S1). A state in which the ambient illuminance of the instrument panel 3 is controlled to be a predetermined state means, for example, a state in which the surface of the instrument panel 3 is uniformly irradiated with external light at a predetermined illuminance in a dark room.

Under a state in which the ambient illuminance is controlled in this way, the display device 2 displays a solid white image (hereinafter referred to as white image) on the entire display part. As a result, the display light of the white image is transmitted forward through the micropores of the instrument panel 3, so that the white image and the pattern of the instrument panel 3 overlap from the front of the instrument panel 3. The image of the instrument panel 3 in this state is captured by a camera from the front.

Next, the image analysis device acquires luminance distribution data of the surface of the instrument panel 3 by analyzing the captured image data of the instrument panel 3 (step S2). FIG. 4 (b) shows the luminance distribution data acquired in this way, that is, the luminance distribution data of the surface of the instrument panel 3 obtained when a white image is displayed over the entire display part under the condition that the ambient illuminance of the instrument panel 3 is controlled to be in a predetermined state. The luminance distribution data acquired here is luminance distribution data of a region facing the entire surface of the display part out of the entire surface of the instrument panel 3.

Next, the image analysis device generates correction data by performing gradation inversion of the luminance distribution data of the instrument panel 3 (step S3). FIG. 4 (c) shows correction data generated by performing gradation inversion (negative-positive inversion) of the luminance distribution data of FIG. 4 (b).

In the present embodiment, the data generated as described above is stored as correction data in the correction data storage part 11. Since the pattern of the instrument panel 3 mounted on each vehicle differs from vehicle to vehicle, correction data reflecting the pattern of the instrument panel 3 is generated for each display system mounted on each vehicle and stored in the correction data storage part 11 of each vehicle. The image processing device 1 may generate the correction data described above.

Referring back to FIG. 3, the description continues. The image processing part 12 corrects the image data to be displayed on the display part of the display device 2 by the correction data read from the correction data storage part 11. In the example of FIG. 3, the image processing part 12 corrects the original image data input from the in-vehicle device 100 based on the correction data stored in the correction data storage part 11, and supplies the image data which is corrected (hereinafter referred to as corrected image data) to the display device 2. For example, the image processing part 12 performs correction processing by superimposing the correction data on the original image data.

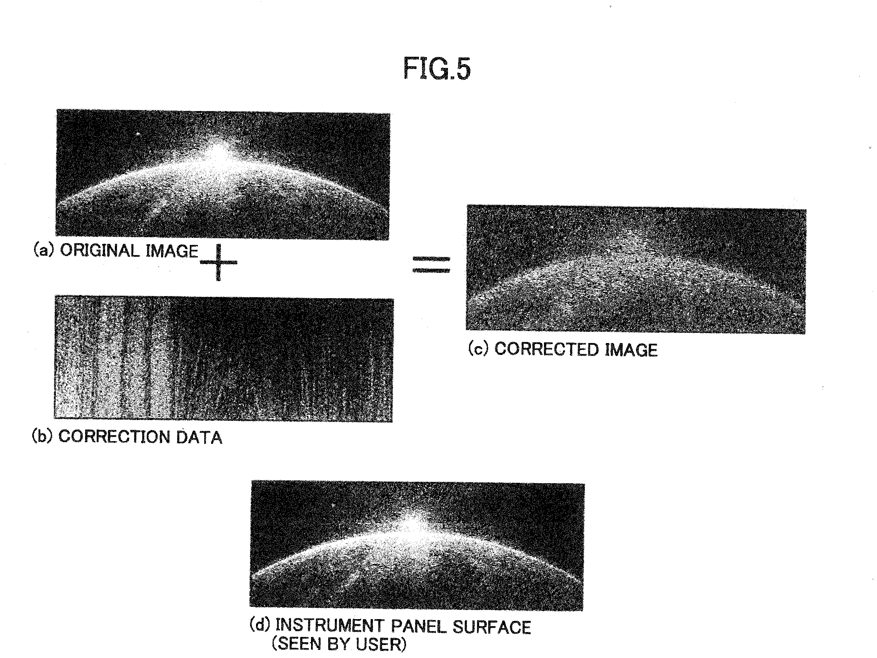

FIG. 5 is a drawing illustrating an example of correction processing by the image processing part 12. FIG. 5 (a) shows the original image data input to the image processing part 12, and FIG. 5 (b) shows the correction data stored in the correction data storage part 11. The image processing part 12 performs processing by superimposing the correction data of FIG. 5 (b) on the original image data of FIG. 5 (a). FIG. 5 (c) shows corrected image data generated by this correction. FIG. 5 (d) shows a state in which the instrument panel 3 is seen from the front when a corrected image is displayed on the display part of the display device 2 based on the corrected image data.

The corrected image data shown in FIG. 5 (c) is image data in which a correction equivalent to canceling the pattern of the instrument panel 3 is performed on the original image data shown in FIG. 5 (a). Therefore, when a corrected image based on the corrected image data is displayed on the display part, the pattern of the instrument panel 3 becomes difficult to be seen due to the components of the correction data included in the corrected image that can be seen through the micropores of the instrument panel 3, and the original image becomes easy to see without being obstructed by the pattern of the instrument panel 3 as shown in FIG. 5 (d).

It should be noted that the ambient illuminance of the instrument panel 3 varies depending on the situation (time, driving location, weather, etc.) when the display system is used in the vehicle. Therefore, an illuminance measuring device to measure ambient illuminance of the instrument panel 3 may be installed in the vehicle, and the image processing part 12 corrects the image data by the correction data corresponding to the ambient illuminance of the instrument panel 3 measured by the illuminance measuring device.

As an example, a plurality of correction data generated under a plurality of situations where the ambient illuminance of the instrument panel 3 differs are stored in the correction data storage part 11 in association with the corresponding ambient illuminance. More specifically, for example, when the display system is manufactured or mounted on a vehicle, the illuminance of the external light irradiated on the surface of the instrument panel 3 in a dark room is changed, and a plurality of correction data corresponding to the respective ambient illuminances are generated and stored in the correction data storage part 11. When the display system is used, the image processing part 12 reads correction data corresponding to the ambient illuminances measured by the illuminance measuring device from the correction data storage part 11, and corrects the image data using the read-out correction data.

Note that, there may be a case where none of the ambient illuminances associated with the correction data stored in the correction data storage part 11 matches the ambient illuminances measured by the illuminance measuring device. In this case, the image processing part 12 uses, for example, correction data associated with the ambient illuminances closest to the ambient illuminances measured by the illuminance measuring device. Alternatively, the image data may be corrected using an average value or a median value of two correction data associated with two ambient illuminances closest to the ambient illuminances measured by the illuminance measuring device. The average value or the median value may be calculated for each pixel of the correction data, or may be calculated for each block that collectively constitutes a plurality of neighboring pixels.

As another example, the following may be performed. That is, one set of correction data generated under a situation where the ambient illuminance of the instrument panel 3 is managed to be in a predetermined state is stored in the correction data storage part 11. More specifically, as described above, for example, when the display system is manufactured or mounted on a vehicle, external light emitted to the surface of the instrument panel 3 in a dark room is set to a predetermined illuminance, and correction data is generated under that situation and stored in the correction data storage part 11. When the display system is used, the image processing part 12 adjusts the correction data read from the correction data storage part 11 based on a predetermined function using the ambient illuminance measured by the illuminance measuring device as an explanatory variable, and corrects the image data by the adjusted correction data.

The predetermined function used here can be obtained, for example, as follows. That is, a plurality of correction data are generated under a plurality of situations where the ambient illuminance of the instrument panel 3 is different, and an interpolation function is obtained from the plurality of ambient illuminances used at this time and the plurality of correction data. The interpolation function may be calculated for each pixel of the correction data, or it may be calculated for each block that collectively constitutes a plurality of neighboring pixels. The interpolation function may be a function expressed by a polynomial or an approximation function using a lookup table.

As described above in detail, in the present embodiment, in the display system in which the front surface of the display part of the display device 2 is covered with a patterned covering surface (instrument panel 3) having a particularly large number of micropores, the image data to be displayed on the display part is corrected by the correction data, using the data generated by gradation inversion of the luminance distribution data appearing on the surface of the instrument panel 3 when the entire display part is uniformly displayed in the same color.

According to the present embodiment configured as described above, the image data to be displayed on the display part is subjected to a correction equivalent to canceling the pattern of the instrument panel 3. Thus, the problem that the display image of the display part seen through the micropores overlaps with the pattern of the instrument panel 3 makes it difficult to see the display image can be reduced, and the quality of the display image can be improved.

Although the above-described embodiment has described an example in which an image of the same color uniformly displayed on the entire display part is used as a white image, the display color is not limited to white. For example, it may be gray or the same color as the color of the instrument panel 3.

Although the above-described embodiment has described an example in which the display system of the present embodiment is applied to a vehicle, the present invention is not limited to this. For example, the present invention is not limited to a type of display system in which the display device 2 is incorporated and fixed inside a dashboard or the like, but may be applied to a portable display system in which the image processing device 1, the display device 2, and the covering surface are configured to be portable.

Further, the present invention is not limited to these embodiments, and various variations and modifications may be made without departing from the scope of the claims.

## Claims

1. A display system, wherein a front surface of a display part is covered with a covering surface which is patterned, and has a number of micropores, comprising:
a correction data storage part configured to store correction data generated by gradation inversion of luminance distribution data appearing on the covering surface when a single color is uniformly displayed on a whole of the display part; and
an image processing part configured to correct image data to be displayed on the display part by the correction data read from the correction data storage part.

2. The display system according to claim 1, wherein the correction data used by the image processing part to correct the image data corresponds to ambient illuminance at the covering surface measured by an illuminance measuring device.

3. The display system according to claim 2, wherein the correction data storage part is configured to store a plurality of correction data in association with corresponding ambient illuminances, the plurality of correction data being generated under a plurality of situations in which ambient illuminance at the covering surface is different, and wherein the image processing part is configured to read the correction data corresponding to the ambient illuminance measured by the illuminance measuring device from the correction data storage part, and to correct the image data by using the correction data which is read out.

4. The display system according to claim 2 or 3, wherein the correction data storage part is configured to store correction data generated under a condition in which ambient illuminance at the covering surface is controlled to be in a predetermined state, and wherein the image processing part is configured to adjust the correction data read from the correction data storage part based on a predetermined function using the ambient illuminance measured by the illuminance measuring device as an explanatory variable, and to correct the image data by the adjusted correction data.

5. An image processing device, which is configured to be applied to a display system, wherein a front surface of a display part is covered with a covering surface which is patterned, and has a number of micropores, the image processing device comprising:
a correction data storage part configured to store correction data generated by gradation inversion of luminance distribution data appearing on the covering surface when a single color is uniformly displayed on a whole of the display part; and
an image processing part configured to correct image data to be displayed on the display part by the correction data read from the correction data storage part.

6. A correction data generating method of generating correction data used to correct image data to be displayed on a display part in a display system in which a front surface of the display part is covered with a covering surface which is patterned, and has a number of micropores, comprising:
capturing an image of the covering surface from a front of the covering surface in a state where a single color is uniformly displayed on a whole of the display part;
acquiring luminance distribution data from captured image data of the covering surface; and
generating the correction data by inverting the luminance distribution data.
